# EUROPEAN PATENT APPLICATION

(11) **EP 1 879 350 A1**
(43) Date of publication of application: **16.01.2008**
(21) Application number: 06405292.1
(22) Date of filing: 10.07.2006
(51) Int. Cl.: H04L 29/06, H04L 12/22

(54) **Distributed computer system with a local area network**

(71) Applicant: ABB RESEARCH LTD., 8050 Zürich (CH)
(72) Inventor: Naedele, Martin, 8050 Zürich (CH); Dzung, Dacfey, 5430 Wettingen (CH)
(74) Representative: ABB Patent Attorneys

(57) **Abstract**

A distributed computer system (1), particularly a distributed control system, comprises multiple communication entities interconnected by a local area network (2) that is delimited by a defined perimeter (3). Furthermore, the system comprises multiple protection modules (12) distributed within the local area network (2) and configured to protect the system from intrusive data communication exchanged between the communication entities. The protection modules (12) reject any data communication for which authentication fails, integrity check fails, and/or there is no confidentiality protection. Attack detectors (11, 11') detect intrusive data communication from the data flow, e.g. based on stored data about defined packet flows and historical log entries related to the data flow. An attack reaction (5) element blocks the data flow from an identified source, in response to respective notifications from a protection module (12) or an attack detector (11, 11'). By detecting intrusive, malicious data communication within the perimeter (3) of the local area network (2), the protection modules (12) make possible perimeterless security.

## Description

### FIELD OF THE INVENTION

The present invention relates to a distributed computer system comprising multiple communication entities and a local area network interconnecting the communication entities, the local area network being delimited by a defined perimeter.

### BACKGROUND OF THE INVENTION

Distributed computer systems rely on data communication networks for exchanging data. Within a defined geographical area, e.g. an office, a control station or a manufacturing plant, local area networks (LAN) are used to interconnect components, i.e. communication entities, of the system. To enable remote access to the distributed computer system, typically, the local area networks are connected to the world wide web of the Internet and/or interconnected through communication links over publicly accessible territories and/or systems. To protect the distributed computer system from intrusion, the local area network is delimited by a perimeter consisting of firewalls and/or virtual private network (VPN) terminators. The perimeter, defined by VPN terminators, firewalls and/or other intrusion detection systems (IDS), protects the distributed computer system from malicious data traffic originating from sources external to the local area network. Conventionally, encrypted communications either required the termination of the encrypted connection at the perimeter or giving up content-based traffic control in firewalls or intrusion detection systems, because encrypted traffic cannot be looked into. Consequently, security of data communication is limited to the perimeter and there is thus a risk that malicious data content is introduced into the distributed computer system, e.g. from or introduced through one of its components, and exchanged between its components via the local area network. Particularly in distributed control systems, intrusion of malicious data into the system can be of catastrophic consequences.

WO 2004/114621 discloses a method of secure data transmission via a field bus used in process automation. According to WO 2004/114621, the data is transmitted in encrypted form.

### DESCRIPTION OF THE INVENTION

It is therefore an objective of the present invention to provide a distributed computing system comprising multiple communication entities, interconnected by a local area network that is delimited by a defined perimeter, and having an increased security over the prior art. It is particularly an objective of the present invention to provide a distributed computing system that relies on a local area network delimited by a defined perimeter but does not have the security of data communication limited to the perimeter. It is particularly an objective of the present invention to provide a distributed control system (DCS), or a supervisory control and data acquisition system (SCADA), having a local area network delimited by a defined perimeter but not having the protection from intrusive data communication limited to the perimeter.

This objective is achieved by a distributed computer system according to claim 1. Further preferred embodiments are evident from the dependent claims.

According to the present invention, the above-mentioned objects are particularly achieved in that a distributed computer system comprising multiple communication entities, and a local area network interconnecting the communication entities and being delimited by a defined perimeter, further comprises multiple protection modules distributed within the local area network and configured to protect the system from intrusive data communication exchanged within the perimeter between the communication entities via the local area network. For example, the system is a distributed control system, the communication entities comprise processing elements including one or more connectivity servers, databases, control applications, and/or optimization applications; and the system further comprises multiple distributed interaction elements comprising an operator workstation, a control panel, and/or a display screen. The protection modules arranged within the local area network of the distributed computer system make possible perimeterless security, i.e. detection and containment of intrusive, malicious data communication exchanged within the perimeter of the local area network. Moreover, the distributed protection modules enable end-to-end security in human machine interface (HMI) and application server parts of the distributed computer system.

In a preferred embodiment, the system further comprises at least one attack detector connected to a communication module, the communication module being connected to the local area network and enabling the communication entities to communicate via the local area network, and configured to detect intrusive data communication from data flow at the communication module.

In an embodiment, the attack detector is further configured to detect the intrusive data communication based on stored data about defined packet flows. For example, the attack detector is further configured to detect the intrusive data communication based on packet flow parameters such as packet size, number of packets, and packet rate.

In an embodiment, the attack detector is further configured to establish automatically the data about defined packet flows during an initial teaching phase and/or an operational phase.

In an embodiment, the attack detector is further configured to detect the intrusive data communication based on data content retrieved from the data flow after decryption of the data flow.

In an embodiment, the attack detector is further configured to detect the intrusive data communication dependent on a current mode of operation of the system. For example, the system further comprises a mode determination module configured to determine the current mode of operation from the data flow exchanged between computers of the distributed computing system, a signal from a processing element located on one of the computers, and/or an instruction from a user of one of the processing elements.

In an embodiment, the attack detector is further configured to detect the intrusive data communication dependent on historical log entries related to the data flow.

In an embodiment, the protection modules are configured to provide for mutual authentication of the communication entities, the communication entities comprising communicating computers, communicating processing elements located on the computers, and/or communicating users using the processing elements.

In an embodiment, particularly in combination with the above-described configuration for mutual authentication, the protection modules are further configured to provide integrity and/or confidentiality of messages exchanged between computers of the distributed computer system and/or between processing elements located on the computers.

In an embodiment, the protection modules are further configured to reject any data communication for which at least one of the following conditions applies: authentication for the data communication fails, integrity check for the data communication fails, authentication for the data communication is successful but a data flow is not authorized, and the data communication is not confidentiality protected.

In an embodiment, the system further comprises at least one attack reaction element, configured to block a data flow from an identified source in the system, in response to respective notifications from one of the protection modules, an attack detector and/or another attack reaction element.

In an embodiment, the system further comprises at least one management module configured to communicate with the protection modules for distributing, verifying, updating, revoking and/or managing cryptographic data elements, access credentials, operational modes, allowed data flows (e.g. allowed data flow volumes or data flow sources and sinks), and/or communication parameters.

In an embodiment, the local area network comprises redundant network connections interconnecting subsets of the attack reaction elements and the attack detectors of the system.

In an embodiment, the system further comprises means to select different redundant network connections for different data flows based on the current operational mode of the system.

In an embodiment, the system further comprises means to select different redundant network connections for different data flows based on information provided by the attack reaction elements, the attack detectors, and the management modules of the system.

### BRIEF DESCRIPTION OF THE DRAWINGS

The present invention will be explained in more detail, by way of example, with reference to the drawings in which:
Fig. 1 shows a block diagram illustrating an embodiment of a distributed computer system with a local area network that is delimited by a defined perimeter,
Fig. 2 shows a block diagram illustrating an embodiment of the distributed computer system with attack detectors,
Fig. 3 shows a block diagram illustrating an embodiment of the distributed computer system with redundant network connections, and
Fig. 4 shows a block diagram illustrating an embodiment of the distributed computer system with an attack reaction element.

### DETAILED DESCRIPTION OF PREFERRED EMBODIMENTS

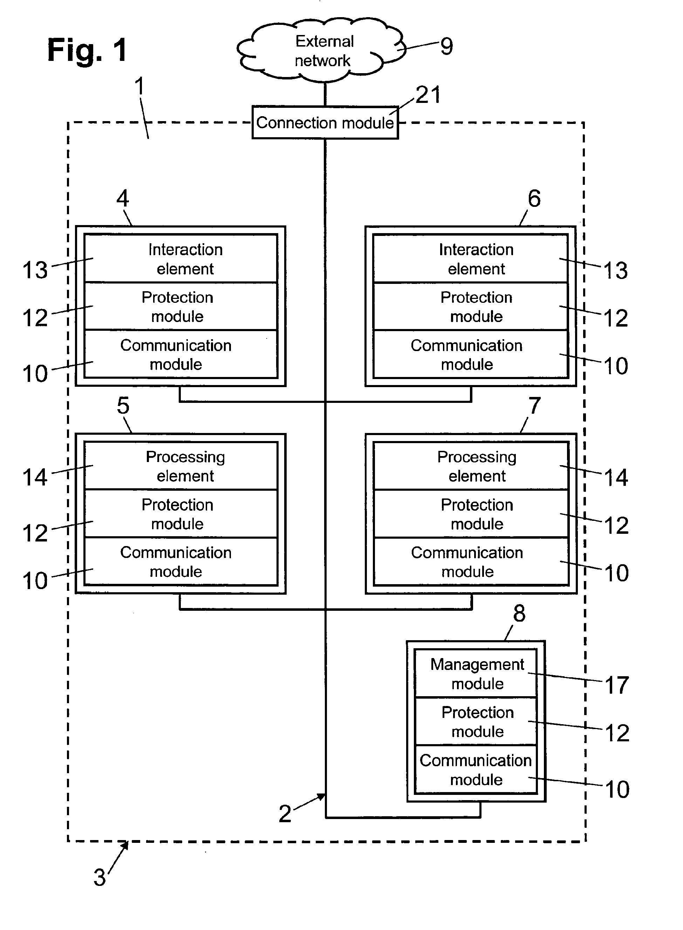

In Figs. 1, 2, 3 and 4, reference numeral 1 refers to a distributed computer system comprising multiple computers 4, 5, 6, 7, 8 (i.e. hosts) interconnected by a local area network 2 for data communication. In an embodiment, the distributed computer system 1 is a distributed control system (DCS) or a distributed automation system, e.g. a supervisory control and data acquisition system (SCADA). The local area network 2 is delimited from external communication networks 9 by connection module 21, for example a router with or without perimeter security features such as one or more VPN terminators, firewalls or other intrusion detection systems. Connection module 21 defines the perimeter 3 of the local area network 2, as indicated schematically by reference numeral 3. The external communication network 9 comprises, for example, the Internet, an Intranet and/or other communication channels to communication entities external to the distributed computer system 1.

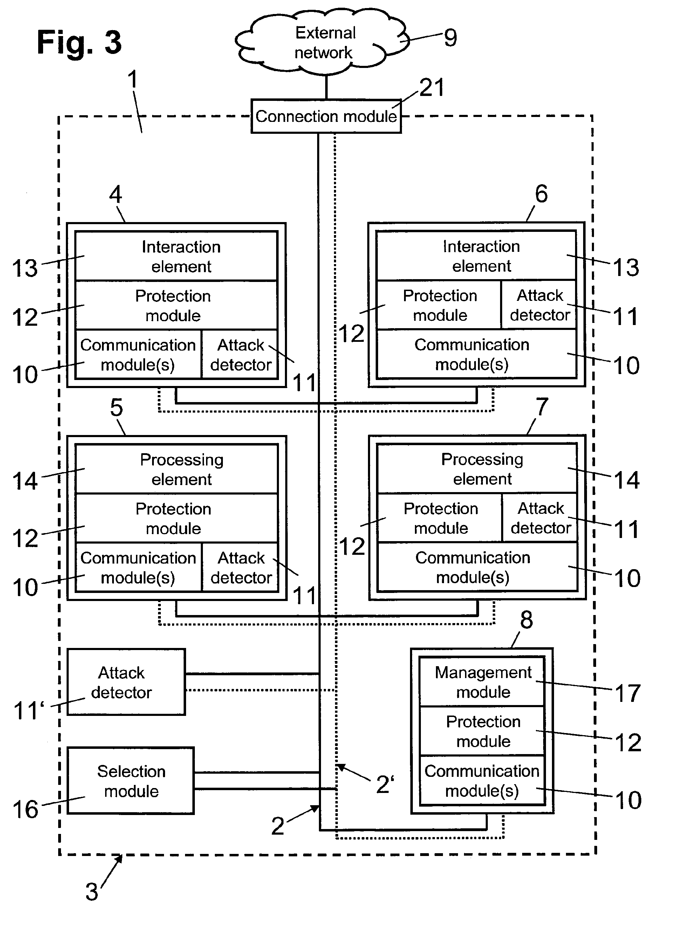

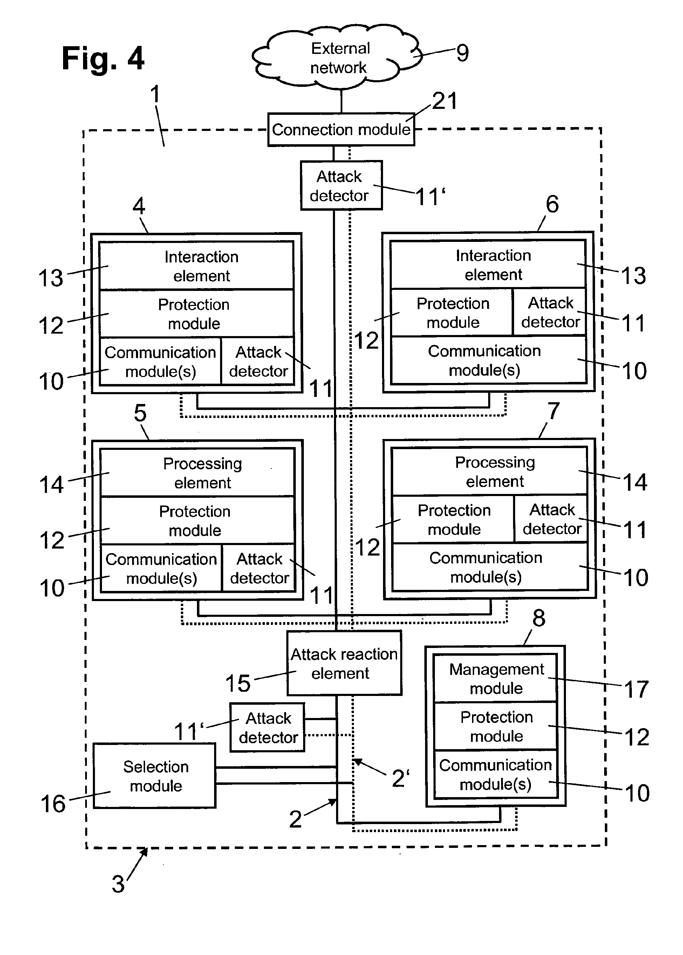

As is illustrated in Figs. 1, 2, 3 and 4, the computers 4, 5, 6, 7, 8 comprise different functional modules and/or elements, particularly a communication module 10 and a protection module 12, described later in more detail. The communication module 10 is configured for data communication via the local area network 2 and possibly via redundant network connections 2', as illustrated in Figs. 3 and 4. Typically, the communication module 10 comprises hardware elements such as a network card and is based on communication protocols such as IEEE 802.3 (Ethernet), IEEE 802.11 (WLAN), IP (Internet Protocol, e.g. version IPv4 or IPv6), TCP protocol (Transmission Control Protocol), and UDP (User Datagram Protocol) protocol. Moreover, computers 4 and 6 comprise an interaction element 13 configured as a human machine interface, e.g. an operator workstation, a control panel and/or a display screen, etc. As is indicated in Figs. 3 and 4, for data communication via the redundant network connections 2', in an embodiment, at least some of the computers 4, 5, 6, 7, 8 include additional (redundant) communication modules 10 or communication module components. The distributed computer system also comprises multiple processing elements 14, as arranged in computers 5 and 7 in the present example. For example, the processing elements 14 comprise a connectivity server, a database, a control application and/or an optimization application.

The protection modules 12 are configured to protect the distributed computer system from intrusive data communication exchanged within the perimeter 3 between communication entities via the local area network 2 or via the redundant network connections 2', respectively; particularly, between communicating computers 4, 5, 6, 7, 8 (hosts), communicating processing elements 14, e.g. applications, and/or communicating principals. For example, the protection modules 12 comprise VPN endpoints, firewalls and/or other intrusion detection systems and provide for mutual authentication between communicating hosts, communicating applications and/or communicating principals; for message integrity exchanged between the communicating hosts or applications; and/or for message confidentiality between the communicating hosts or applications. For example, the protection modules 12 make use of IPsec (IP security) protocol, TLS (Transport Layer Security) protocol, SSL (Secure Socket Layer) protocol, SSH (Secure Shell, e.g. version v1 or v2) protocol, asymmetric encryption, symmetric encryption, and/or hybrid encryption. The protection modules 12 are configured to reject any data traffic for which authentication fails, for which integrity check fails, and/or which is not confidentiality protected.

As is illustrated in Figs. 1, 2, 3, 4, the distributed computer system 1 comprises at least one management module 17, arranged in computer 8 in the present example. The management module 17 is configured to distribute, verify, update, revoke, and/or manage cryptographic data elements, access credentials, operational modes, and/or communication parameters on at least some of the protection modules 12. In an embodiment, the management module 17 is part of at least one interaction element 13. Multiple management modules 17 communicate with each other, based on a peer or hierarchical relationship to each other.

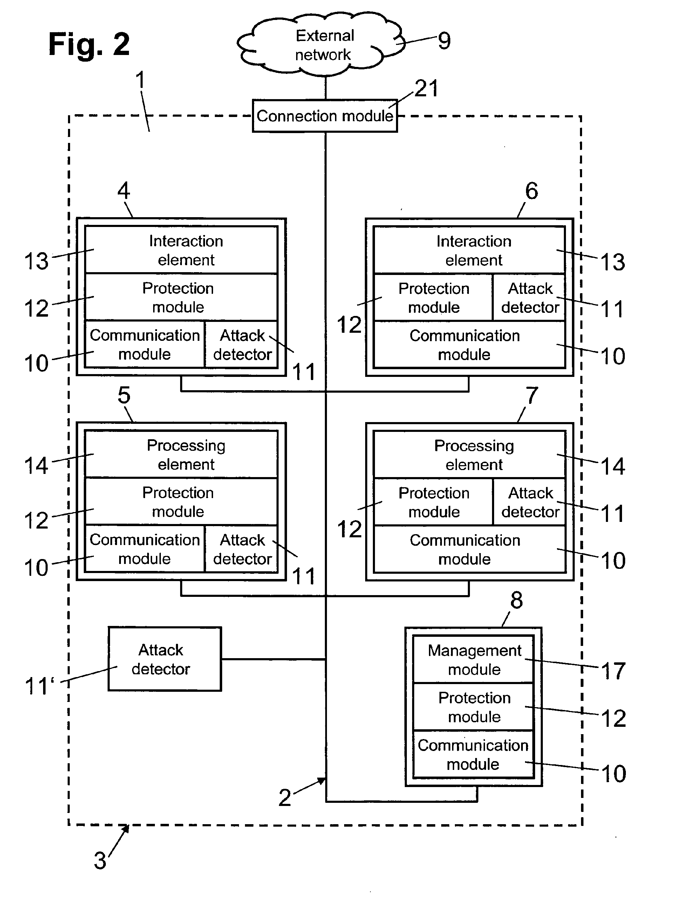

As illustrated in Figs. 2, 3, 4, in some embodiments, the distributed computer system 1 also comprises attack detectors 11 arranged in computers 4, 5, 6, 7, as well as attack detectors 11' arranged as separate elements. The attack detectors 11 are connected to at least one communication module 10 or protection module 12 (thus connected indirectly to a communication module 10). The attack detectors 11, 11' are implemented preferably as programmed software modules and configured to detect intrusive data communication exchanged within perimeter 3 by determining whether or not a data packet flow is legitimate. Preferably, this decision is based on stored data, e.g. in a data table, about defined packet flows, e.g. including packet flow parameters such as packet size, number of packets (amount) and packet rate. In an embodiment, the attack detectors 11, 11' comprise a learning function for establishing the stored data about the defined packet flows during an initial teaching phase and/or during operation of the distributed computer system 1. Furthermore, the attack detectors 11, 11' are configured to determine whether or not a data packet, connection, session, message, or data flow is legitimate by evaluating the content of received data transmissions, after it has been decrypted, integrity checked, and source authenticated for the respective communication end-point. In a further embodiment, the attack detectors 11, 11' are configured to further make the decision of packet flow legitimacy dependent on the current mode of operation of the distributed computer system 1 and/or the respective host. The mode of operation is set by a mode determination module (not illustrated) as determined from packet flows, as determined by a processing element 14, and/or as determined by an interaction element 13, e.g. responsive to a user instruction. Moreover, the decision of packet flow legitimacy is further based on the history of the connection, session, or data flow, e.g. based on historical log entries related to the data flow.

As illustrated in Fig. 4, in an embodiment, the distributed computer system 1 further comprises at least one attack reaction element 15 connected to the local area network 2. The attack reaction element 15 is arranged in one of computers 4, 5, 6, 7, 8 or as a separate element. The attack reaction element is configured to communicate with a protection module 12, an attack detector 11, 11', another attack reaction element 15, and/or a management module 17. Responsive to a respective notification from a protection module 12, an attack detector 11, 11', and/or another attack reaction element 15, the receiving attack reaction element 15 blocks data flows from an identified source of traffic in the local area network 2 or redundant network connection 2', respectively.

As illustrated in Figs. 3 and 4, the distributed computer system 1 comprises redundant network connections 2' that can be activated as an alternative to the local area network 2 for interconnecting at least some of the computers 4, 5, 6, 7, 8. Dependent on the embodiment, at least some of the redundant network connections 2' have an identical topology, e.g. the same topology as the local area network 2, or have different topologies and connect subsets of communication modules 10, attack detectors 11, 11' and/or attack reaction elements 15 in the distributed computer system 1. In an embodiment, different redundant networks or network connections 2', respectively, are used for different data flows based on the current operational mode of the system. In different embodiments, all redundant networks (or network connections 2', respectively) connected to a host use the same or different communication modules 10 and protection modules 12. In an embodiment, in some operational modes, at least some of the redundant connections 2' or network segments are limited to traffic for exchanging information between attack detectors 11, 11', between attack detectors 11, 11' and management modules 10, and/or between attack detectors 11, 11' and attack reaction elements 15.

For example, the redundant network connections 2' are selected and activated by a selection module 16 that is implemented on one or more of the computers 4, 5, 6, 7, 8 or as a separate entity.

## Claims

1. A distributed computer system (1) comprising multiple communication entities, and a local area network (2) interconnecting the communication entities and being delimited by a defined perimeter (3), wherein the system further comprises:
multiple protection modules (12) distributed within the local area network (2) and configured to protect the system from intrusive data communication exchanged within the perimeter (3) between the communication entities via the local area network (2).

2. The system according to claim 1, further comprising multiple communication modules (10) connected to the local area network (2) and enabling the communication entities to communicate via the local area network (2); and at least one attack detector (11, 11') connected to one of the communication modules (10) and configured to detect intrusive data communication from data flow at the communication module (10).

3. The system according to claim 2, wherein the attack detector (11, 11') is further configured to detect the intrusive data communication based on stored data about defined packet flows.

4. The system according to claim 2, wherein the attack detector (11, 11') is further configured to detect the intrusive data communication based on packet flow parameters such as packet size, number of packets, and packet rate.

5. The system according to claim 2, wherein the attack detector (11, 11') is further configured to establish automatically the data about defined packet flows during at least one of an initial teaching phase and an operational phase.

6. The system according to claim 2, wherein the attack detector (11, 11') is further configured to detect the intrusive data communication based on data content retrieved from the data flow after decryption of the data flow.

7. The system according to claim 2, wherein the attack detector (11, 11') is further configured to detect the intrusive data communication dependent on a current mode of operation of the system.

8. The system according to claim 7, further comprising a mode determination module configured to determine the current mode of operation from one of data flow exchanged between computers (4, 5, 6, 7, 8), a signal from a processing element (14) located on one of the computers (4, 5, 6, 7, 8), and an instruction from a user of the processing element (14).

9. The system according to claim 2, wherein the attack detector (11, 11') is further configured to detect the intrusive data communication dependent on historical log entries related to the data flow.

10. The system according to claim 1, wherein the protection modules (12) are configured to provide for mutual authentication of the communication entities, the communication entities comprising at least one of communicating computers (4, 5, 6, 7, 8), communicating processing elements (14) located on the computers (4, 5, 6, 7, 8), and communicating users using the processing elements (14).

11. The system according to claim 1, wherein the protection modules (12) are configured to provide at least one of integrity and confidentiality of messages exchanged between computers (4, 5, 6, 7, 8) and/or processing elements (14) located on the computers (4, 5, 6, 7, 8).

12. The system according to claim 1, wherein the protection modules (12) are configured to reject any data communication for which at least one of the following conditions applies: authentication for the data communication fails, authorization fails, integrity check for the data communication fails, authentication for the data communication is successful but a data flow is not authorized, and the data communication is not confidentiality protected.

13. The system according to claim 1, further comprising at least one attack reaction element (5) configured to block a data flow from an identified source in the system, in response to respective notifications from one of the protection modules (12), an attack detector (11, 11'), and/or another attack reaction element (5).

14. The system according to claim 1, further comprising at least one management module (17) configured to communicate with the protection modules (12) for at least one of distributing, verifying, updating, revoking and managing cryptographic data elements, access credentials, operational modes, allowed data flows, and communication parameters.

15. The system according to claim 1, wherein the local area network (2) comprises redundant network connections (2') interconnecting subsets of attack reaction elements (5) and attack detectors (11, 11') of the system.

16. The system according to claim 15, further comprising a selection module (16) configured to select different redundant network connections (2') for different data flows based on a current operational mode of the system.

17. The system according to claim 15, wherein the selection module (16) is further configured to select different redundant network connections (2') for different data flows based on information provided by the attack reaction elements (5), the attack detectors (11, 11'), and management modules (17) of the system.

18. The system according to claim 1, being further configured as a distributed control system, the communication entities comprising processing elements (14) including at least one of connectivity server, database, control application, and optimization application; and the system further comprising multiple distributed interaction elements (13) comprising at least one of operator workstation, control panel, and display screen.
